# EUROPEAN PATENT APPLICATION

(11) **EP 4 718 667 A1**
(43) Date of publication of application: **01.04.2026**
(21) Application number: 24176010.7
(22) Date of filing: 15.05.2024
(51) Int. Cl.: H02J 7/00

(54) **CHARGING METHOD FOR CHARGING MULTIPLE BATTERY PACKS OF AN ELECTRICAL POWER SYSTEM AND ELECTRICAL POWER SYSTEM**

(71) Applicant: Lilium GmbH, 82234 Wessling (DE)
(72) Inventor: RAABE, Stefan, 82234 Wessling (DE); MUSTAFA, Shariq, 82234 Wessling (DE)
(74) Representative: Ter Meer Steinmeister & Partner

(57) **Abstract**

The invention is related to a charging method for charging multiple battery packs (12) of an electrical power system (10), wherein each battery pack (12) comprises a switch (22) for switching between a charging state and a noncharging state of the battery pack (12), wherein the charging method comprises the following steps:
measuring a voltage of each battery pack (12) and determining a lowest voltage battery pack (12),
connecting the lowest voltage battery pack (12) to a charger with the switch (22) of the lowest voltage battery pack (12) and requesting a charging current from the charger,
measuring the voltage of the lowest voltage battery pack (12) while charging the lowest voltage battery pack (12), and
connecting a next higher voltage battery pack (12) to the charger in parallel to the lowest voltage battery pack (12) with the switch (22) of the next higher voltage battery pack (12) if the voltage of the lowest voltage battery pack (12) being charged is within a predefined safe range of a voltage of the next higher voltage battery pack (12) and requesting an amended charging current from the charger for charging the lowest voltage battery pack (12) and the next higher voltage battery pack (12) together.

## Description

The present invention is related to a charging method for charging multiple battery packs of an electrical power system, an electrical power system as well as a computer program product for carrying out such a charging method.

It is known that in charging schemes in the state of the art, there are charging contactors between a charging inlet and the battery packs of an electrical power system. The charging contactors connect and disconnect the charger from the electrical power system of the aircraft to enable a smooth faultless charging process. Charging contactors also ensure that the charging inlet is free of voltages when a ground personnel connects or disconnects the charging plug to the electrical power system of the aircraft. However, charging contactors also add weight to the aircraft.

In an electrical power system of an aircraft there are multiple battery packs to be charged in parallel. When the battery packs are at different state of charge and different voltage levels, it is not possible to connect them all together as this would lead to a huge balancing current flowing in between the battery packs. This balancing current flows between parallel battery packs to ensure that the battery packs achieve equal voltages. This current is not useful in any sense for two reasons: first, it is not controllable and therefore in certain cases it is possible that the current violates the battery limits and triggers protective devices which is undesirable as it puts the battery pack in non-usable state. Secondly, the balancing current does not add any energy to the battery packs as it is not the current that comes from the charger. Instead, due the losses in the transfer the overall result is loss in energy. Because of the unwanted balancing currents, a balancing circuit can be employed to limit the balancing currents. However, such a balancing circuit adds further weight to the aircraft.

It is an object of the present invention to overcome the disadvantages described above at least partly. In particular it is an object of the present invention to provide a solution to further reduce the weight of an electrical power system of an aircraft.

Aforesaid problem is solved by a charging method with the features of claim 1, by an electrical power system with the features of claim 10 as well as a computer program product with the features of claim 14. Further features and details of the invention result from the subclaims, the description and the drawings. Features and details described in connection with the charging method according to the invention naturally also apply in connection with the electrical power system according to the invention as well as with the computer program product according to the invention, and vice versa in each case, so that reference is or can always be made mutually with regard to the disclosure concerning the individual aspects of the invention.

According to the present invention a charging method for charging multiple battery packs of an electrical power system is described. Each battery pack comprises a switch for switching between a charging state and a noncharging state of the battery pack. The charging method comprises the following steps:
measuring a voltage of each battery pack and determining a lowest voltage battery pack,
connecting the lowest voltage battery pack to a charger with the switch of the lowest voltage battery pack and requesting a charging current from the charger,
measuring the voltage of the lowest voltage battery pack while charging the lowest voltage battery pack, and
connecting a next higher voltage battery pack to the charger in parallel to the lowest voltage battery pack with the switch of the next higher voltage battery pack if the voltage of the lowest voltage battery pack being charged is within a predefined safe range of a voltage of the next higher voltage battery pack and requesting an amended charging current from the charger for charging the lowest voltage battery pack and the next higher voltage battery pack together.

The charging method ensures that the lowest voltage battery pack is brought to higher levels faster, while ensuring there is no balancing current flowing in between battery packs. Thus, also the need of a balancing circuit is avoided which means further weight for the balancing circuit can be avoided and complications with respect to the balancing circuit can be avoided. This ensures a faster and more efficient charging process. Avoiding balancing circuits also improves the energy efficiency of the electrical power system as no energy is wasted through balancing resistors.

The switches of the battery packs can be bi-directional switches. The switches can be used to connect battery packs in parallel during normal operations. This makes sure no additional weight for switches is added to the system. The lowest voltage battery pack is the battery pack which has the lowest voltage. The next higher voltage battery pack is the battery pack which has compared to the lowest voltage battery pack the next higher voltage.

The predefined safe range is a voltage range where no or no relevant balancing current is flowing between the respective battery packs.

The charging current is the current for charging the lowest voltage battery pack. The amended charging current is the current for charging the lowest voltage battery pack and the next higher voltage battery pack together.

According to an aspect of the charging method the charging method comprises the further steps:
measuring the voltages of the battery packs being charged, and
connecting a further next higher voltage battery pack to the charger in parallel to the battery packs being charged with the switch of the further next higher voltage battery pack if the voltages of the battery packs being charged are within a predefined safe range of the voltage of the further next higher voltage battery pack and requesting a further amended charging current from the charger for charging the battery packs being charged and the further next higher voltage battery pack together.

The charging method ensures that lower voltage battery packs are brought to higher levels faster, while ensuring there is no balancing current flowing in between the battery packs. This ensures a faster and more efficient charging process.

The further amended charging current is the current for charging the battery packs being charged and the further next higher voltage battery pack together.

According to a further aspect of the charging method the steps described before are repeated until all battery packs are connected and charged till they reach a desired state of charge. Advantageously no balancing circuit is needed.

According to a further aspect of the charging method a requested charging current requested from the charger is calculated by closed loop control algorithms for all connected battery packs and a further step, wherein
the closed loop control algorithms comprise calculating a calculated desired charging current for each battery pack connected to the charger based on an individual battery pack desired current and an actual battery pack current, and
the further step comprises selecting the minimum of all calculated desired charging currents from the charger as the requested charging current requested from the charger.

The individual battery pack desired current can be determined for each battery pack connected to the charger. The individual battery pack desired current can be based on a number of factors that can include the individual battery pack charging current limits, the individual battery pack thermal state, the individual battery pack desired charging duration, and the individual battery pack target state of charge. The desired charging duration and target state of charge can be provided by an external user.

Especially, the individual battery pack desired current can be limited to a maximum charging current the charger can provide or a maximum charging current the battery pack can accept without violating the limits of the battery pack.

The actual battery pack current is measured for each battery pack and used as feedback. Sensors are measuring the actual battery pack current flowing into the battery pack.

The minimum of all calculated desired charging currents from the charger is the requested charging current which is to be requested from the charger for the group of connected battery packs.

This ensures that no balancing current flows in between battery packs. Slowly the gap of voltages between battery packs narrows down and then the battery packs charge together.

The aim is to ensure that the individual battery pack desired current is as near the value of the actual battery pack current for at least one battery pack and for all other battery packs the actual battery pack current is either very near or less than the individual battery pack desired current. This ensures no limits are violated during the charging process.

The calculated desired charging current is calculated based on each battery pack. The calculated desired charging current is the charger current which would result in an actual battery pack current which is equal to or very nearly equal to the individual battery pack desired current. There are multiple battery packs and therefore there are multiple calculated desired charging currents satisfying the conditions for one battery pack each. The minimum of these is selected so that the requested charging current results in an actual battery pack current for at least one battery pack that is equal to or very nearly equal to the individual battery pack desired current, without resulting actual battery pack currents in other battery packs violating their individual battery pack desired current. The individual battery pack desired current is achieved via the requested charging current.

The charging current, the amended charging current or the further amended charging current as mentioned before can be equal to the requested charging current requested from the charger.

According to a further aspect of the charging method an amended requested charging current requested from the charger is calculated by another closed loop control algorithm and a further step, wherein
the another closed loop control algorithm is performed if a voltage provided by the charger is within a specified range of a maximum voltage of the electrical power system, wherein the another closed loop control algorithm comprises calculating a constant voltage charging current needed from the charger to ensure a constant voltage at the electrical power system, and
the further step comprises selecting a minimum of the constant voltage charging current and the requested charging current as an amended requested charging current requested from the charger.

The another closed loop control algorithm based on voltages becomes active if the voltage provided by the charger is within the specified range of the maximum voltage of the electrical power system. This specified range can be anywhere between 90% to 100% of the maximum voltage of the electrical power system. The maximum voltage of the electrical power system is the maximum voltage the electrical power system can provide.

This is to ensure that there is a smooth switching from current based control to voltage-based control of the charging procedure.

The aim is to ensure that the charging voltages do not cross the maximum voltage of the electrical power system. Therefore, another closed loop control algorithm calculates a constant voltage charging current which would ensure that the voltages of the electrical power system stay constant at its maximum level and do not exceed this value.

The constant voltage charging current ensures a constant maximum voltage at the electrical power system, and the requested charging current ensures an actual battery pack current for at least one battery pack matching the individual battery pack desired current. The minimum of the constant voltage charging current and the requested charging current is selected as the amended requested charging current. This amended requested charging current is the maximum current that has the following two properties. First, it does not result in a voltage that is greater than the maximum voltage of the electrical power system. Second, it does not result in an actual battery pack current that is greater than the individual battery pack desired current for any battery pack.

According to a further aspect of the charging method a coolant is flowing through the battery packs so that heat generated in battery packs during charging is carried to other battery packs of the electrical power system.

Therefore, the heat is dissipated more efficient and other battery packs are brought to chargeable temperatures quickly. This makes the charging of all other battery packs much more efficient. In cold conditions, when the battery packs are at low temperatures, it is not very efficient to charge them. Using the heat generated by one battery pack to heat other battery packs can be used to make the charging of other battery packs more efficient.

According to a further aspect of the charging method the charging method comprises the further step before measuring the voltage of each battery pack: detecting if a charging door of a charging inlet electrically connected to the battery packs is open or closed.

Each battery pack comprises a switch and the switch is electrically connectable to a charging inlet. The charging inlet comprises a charging door and the charging door comprises a charging door sensor. With the charging door sensor, it can be detected if the charging door is closed or open. If the charging door is closed no charger is connected to the charging inlet. If the charging door is open, the switches of all battery packs are kept disconnected to keep the charging inlet safe until a charger is detected.

According to a further aspect of the charging method the charging method comprises the further step after detecting if the charging door is open or closed: opening each switch of each battery pack for isolating the charging inlet.

Each battery pack comprises a switch. The battery packs can be electrically connected in parallel to the charging inlet via the switches. The respective switch can open or close the electrical connection of the respective battery pack and the charging inlet.

According to a further aspect of the charging method the charging method comprises the further step after opening each switch: electrically connecting the charger to the charging inlet for charging the battery packs. When each switch of each battery pack is open the charger can be connected to the charging inlet safely.

According to the present invention an electrical power system for an aircraft is described. The electrical power system comprises a plurality of electrical loads, a plurality of battery packs, a control unit and an electrical power distribution network. The electrical power distribution network is configured to connect the battery packs with the electrical loads, such that each electrical load can be driven by at least one associated battery pack via at least one associated power lane of the electrical power distribution network. Each battery pack comprises a switch for switching between a charging state and a noncharging state of the battery pack. The control unit is configured to run the charging method according to the invention.

Because the control unit is configured to run the charging method according to the invention the electrical power system has the same advantages as those explained in detail with reference to the charging method according to the invention.

The weight is of paramount importance in design of an efficient aircraft. Therefore, the use of charging contactors is avoided in the present invention. Weight of the electrical power system can be saved by making use of battery packs comprising switches that are used to connect battery packs in parallel.

The control unit can be connected to the switches of the battery packs, to the charger, to the battery packs for measuring the state of charge of the battery packs, to the charging inlet and/or to further devices.

According to an aspect of the electrical power system each switch comprises a solid state power controller. The solid state power controller (SSPC) can be very fast, i.e. the time needed for switching can be very short. Furthermore, the solid state power controller (SSPC) can be useful as a circuit breaker.

According to a further aspect of the electrical power system the electrical power system comprises a charging inlet and each switch is directly electrically connected to the charging inlet. Therefore, a charging contactor between the charging inlet and the battery packs is no longer needed. Because the charging contactor is omitted the weight of the aircraft can be reduced. The charging inlet provides an interface for the electrical connection to a charger for charging the battery packs.

According to a further aspect of the electrical power system the charging inlet comprises a charging door and a charging door sensor for detecting if the charging door is open or closed. Because of the charging door and the charging door sensor it is possible to determine when a charger might be connected to the charging inlet.

According to the present invention a computer program product is described. The computer program product comprises instructions which cause a control unit of an electrical power system according to the invention to perform the charging method according to the invention. Thus, a computer program product according to the invention has the same advantages as those explained in detail with reference to the electrical power system according to the invention and the charging method according to the invention.

Further advantages, features and details of the invention will be apparent from the following description, in which embodiments of the invention are described in detail with reference to the drawings. Those drawings show:
- Figure 1: a flow chart of a charging method,
- Figure 2: a schematic diagram for determining the desired charging current and the amended desired charging current,
- Figure 3: a diagram of the charging current for single battery packs and of the total charging current for all battery packs,
- Figure 4: a diagram of the charging voltages of the battery packs, and
- Figure 5: a schematic view of an electrical power system.

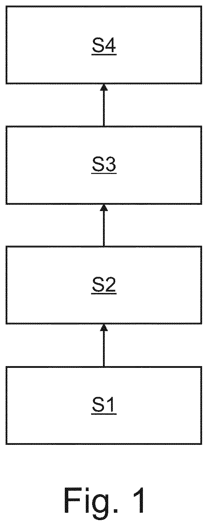

Fig. 1 shows a flow chart of a charging method for charging multiple battery packs 12 of an electrical power system 10. Each battery pack 12 comprises a switch 22 for switching between a charging state and a noncharging state of the battery pack 12.

The method comprises the following steps:
In a first step S1 a voltage of each battery pack 12 is measured. Then it is determined which of the battery packs 12 is the lowest voltage battery pack 12, i.e. the battery pack 12 having the lowest voltage.

In a second step S2 the lowest voltage battery pack 12 is connected to a charger with the switch 22 of the lowest voltage battery pack 12. Then a charging current is requested from the charger for charging the lowest voltage battery pack.

In a third step S3 the voltage of the lowest voltage battery pack is measured while the lowest voltage battery pack is charged. That means the voltage of the lowest voltage battery pack can be monitored.

In a fourth step S4 it is determined if the voltage of the lowest voltage battery pack 12 being charged is within a predefined safe range of a voltage of a next higher voltage battery pack 12. The predefined safe range is the voltage range where no or no relevant balancing current is flowing between the next higher voltage battery pack and the lowest voltage battery pack. Then if the voltage difference is within the predefined safe range the next higher voltage battery pack 12 is connected to the charger in parallel to the lowest voltage battery pack 12 with the switch 22 of the next higher voltage battery pack 12. Next an amended charging current is requested from the charger for charging the lowest voltage battery pack 12 and the next higher voltage battery pack 12 together.

With this charging method the state of charge of the lowest voltage battery pack is brought to higher levels faster, while ensuring there is no balancing current flowing in between battery packs.

In a fifth step the voltages of the battery packs 12 being charged are measured. That means the voltages of the battery packs 12 being charged can be monitored.

In a sixth step it is determined if the voltages of the battery packs 12 being charged are within a predefined safe range of the voltage of the further next higher voltage battery pack 12. The predefined safe range is the voltage range where no or no relevant balancing current is flowing between the further next higher voltage battery pack and the battery packs 12 being charged. Then if the voltage difference is in the predefined safe range the further next higher voltage battery pack 12 is connected to the charger in parallel to the battery packs 12 being charged with the switch 22 of the further next higher voltage battery pack 12. Next a further amended charging current is requested from the charger for charging the battery packs 12 being charged and the further next higher voltage battery pack 12 together.

The charging method ensures that lower voltage battery packs are brought to higher levels of state of charge faster, while ensuring there is no balancing current flowing in between the battery packs.

The fifth and sixth step can be repeated until all battery packs 12 are connected and charged till they reach a desired state of charge.

Before the above described steps one to six the charging method can comprise the following steps: Detecting if a charging door 26 of a charging inlet 24 electrically connected to the battery packs 12 is open or closed. If the charging door is open and no charger is electrically connected to the charging inlet 24 opening each switch 22 of each battery pack 12 for isolating the charging inlet 24. Now, when each switch 22 of each battery pack 12 is open the charger can be connected to the charging inlet 24 safely. Then, electrically connecting the charger to the charging inlet 24 for charging the battery packs 12.

If the battery packs are cold the charging process is not effective. In order to improve the charging process a coolant can be used, wherein the coolant is flowing through the battery packs 12 so that heat generated in battery packs during charging can be carried to other battery packs 12 of the electrical power system 10.

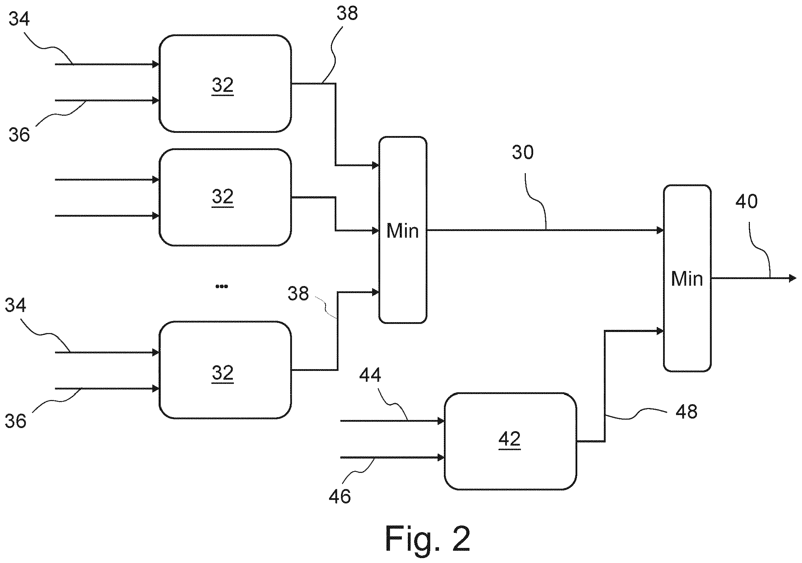

Fig. 2 shows a schematic diagram for determining the requested charging current 30 and the amended requested charging current 40. Fig. 2 shows how a charging current, that means the requested charging current 30 or the amended requested charging current 40, for the whole electrical power system 10 can be calculated.

The requested charging current 30 requested from the charger can be calculated by closed loop control algorithms 32 and a further step.

Each closed loop control algorithm 32 comprise calculating an calculated desired charging current 38 for the respective battery pack 12 connected to the charger. The calculation of the calculated desired charging current 38 is based on an individual battery pack desired current 34 and an actual battery pack current 36. The individual battery pack desired current 34 can depend at least partially on a maximum charging current the battery pack 12 can accept without violating the limits of the battery pack 12, and user inputs such as charging duration and target state of charge, etc.. The actual battery pack current 36 is used as a feedback.

The further step comprises selecting the minimum of all calculated desired charging currents 38 as the requested charging current 30 requested from the charger.

The amended requested charging current 40 requested from the charger can be calculated by another closed loop control algorithm 42 and a further step.

If a voltage 46 provided by the charger is within a specified range of a maximum voltage 44 of the electrical power system 10 the another closed loop control algorithm 42 can be performed. The specified range can be anything from 90% to 100% of the maximum voltage of the electrical power system 10. With that the current based control is switched to the voltage based control. The another closed loop control algorithm 42 comprises calculating a constant voltage charging current 48 needed from the charger to ensure a constant voltage at the battery packs 12.

The further step comprises selecting a minimum of the constant voltage charging current 48 and the requested charging current 30 as an amended requested charging current 40 requested from the charger.

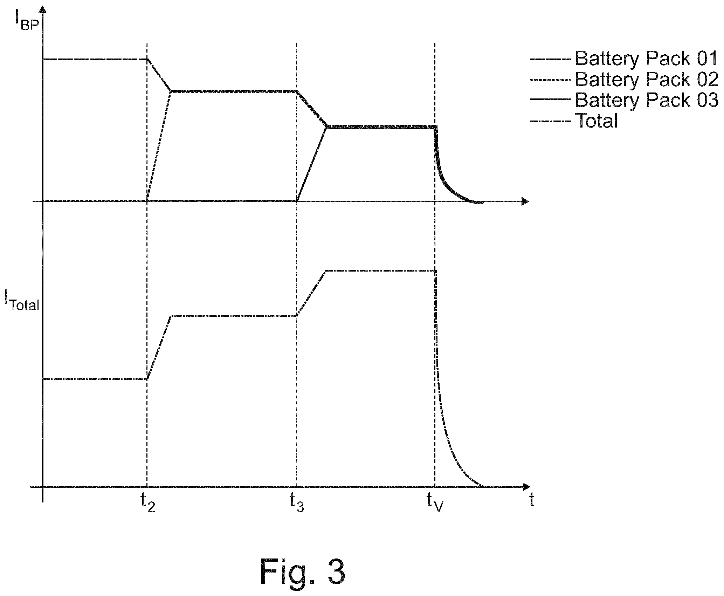

Fig. 3 shows a diagram of the charging current I_{BP} for single battery packs 12 and of the total charging current I_{Total} for all battery packs 12. As can be seen from Fig. 3 first only battery pack 01 is charged. Then at time t₂ battery packs 01 and 02 are charged. Therefore, the total charging current I_{Total} increases. A short time after t₂ the charging currents I_{BP} of battery pack 01 and of battery pack 02 are equal. Then at time ts battery packs 01, 02 and 03 are charged. Therefore, the total charging current I_{Total} further increases. A short time after ts the charging currents I_{BP} of battery packs 01, 02 and 03 are equal. At time tv, the another closed loop control algorithm 42 for constant voltage charging becomes active and slowly reduces the charging current. Therefore, both I_{BP} and I_{Total} decrease.

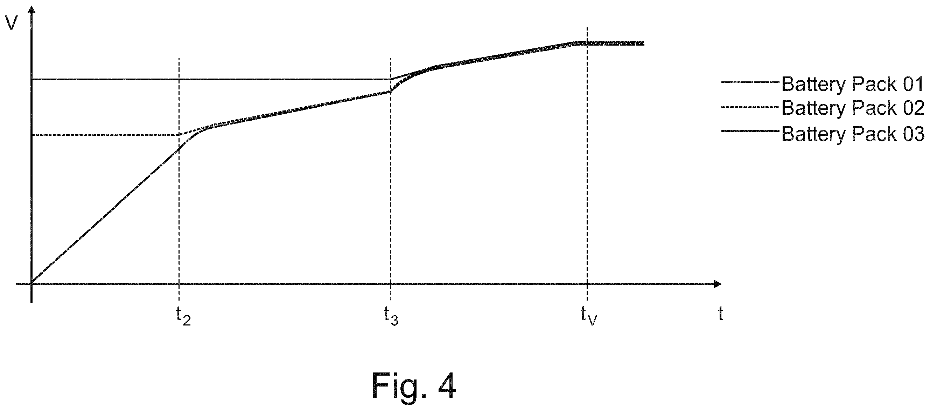

Fig. 4 shows a diagram of the charging voltages V of the battery packs 01, 02 and 03. First only battery pack 01 is charged. Therefore, only the charging voltage V of battery pack 01 increases. At time t₂ also battery pack 02 is charged. Therefore, the charging voltages V of battery packs 01 and 02 increase together. At time ts also battery pack 03 is charged. Therefore, the charging voltages V of battery packs 01, 02 and 03 increase together. At time tv, the another closed loop control algorithm 42 for constant voltage charging becomes active.. Thus, the charging voltages V of battery packs 01, 02 and 03 remain constant.

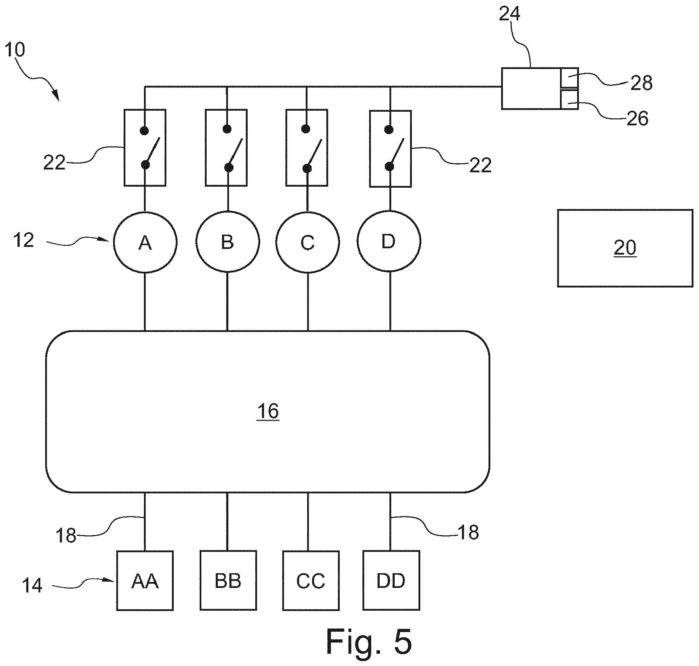

Fig. 5 shows a schematic view of an electrical power system 10 for an aircraft. The electrical power system 10 comprises a plurality of electrical loads 14, a plurality of battery packs 12, a control unit 20 and an electrical power distribution network 16. In Fig. 5 four battery packs A, B, C and D are shown. However, the number of battery packs 12 is not limited to this number. Further, four electrical loads AA, BB, CC and DD are shown. However, the number of electrical loads is not limited to this number.

The electrical power distribution network 16 is configured to connect the battery packs 12 with the electrical loads 14. Each electrical load 14 can be driven by at least one associated battery pack 12 via at least one associated power lane 18 of the electrical power distribution network 16.

Further, each battery pack 12 comprises a switch 22 for switching between a charging state and a noncharging state of the battery pack 12. Each switch 22 can comprise a solid state power controller (SSPC).

As shown in Fig. 5 the electrical power system 10 comprises a charging inlet 24 and each switch 22 is directly electrically connected to the charging inlet 24. The charging inlet 24 comprises a charging door 26 and a charging door sensor 28 for detecting if the charging door 26 is open or closed.

The control unit 20 is configured to run the charging method according to the invention. The control unit 20 can be connected to a plurality of devices. For example, the control unit 20 can be connected to the switches 22 of the battery packs 12, to the charger, to the battery packs 12 for measuring the state of charge of the battery packs 12 and/or to the charging inlet 24.

The above description of the drawings describes the present invention by way of example only.

### Reference signs

- 10: electrical power system
- 12; A, B, C, D: battery pack
- 14; AA, BB, CC, DD: electrical load
- 16: electrical power distribution network
- 18: power lane
- 20: control unit
- 22: switch
- 24: charging inlet
- 26: charging door
- 28: charging door sensor
- 30: requested charging current
- 32: closed loop control algorithm
- 34: individual battery pack desired current
- 36: actual battery pack current
- 38: calculated desired charging current
- 40: amended requested charging current
- 42: another closed loop control algorithm for constant voltage charging
- 44: maximum voltage of the electrical power system
- 46: voltage provided by the charger
- 48: constant voltage charging current

- I_{BP}: charging current for a single battery pack
- I_{Total}: total charging current for all battery packs

## Claims

1. Charging method for charging multiple battery packs (12) of an electrical power system (10), wherein each battery pack (12) comprises a switch (22) for switching between a charging state and a noncharging state of the battery pack (12), **characterized by** the following steps:
measuring a voltage of each battery pack (12) and determining a lowest voltage battery pack (12),
connecting the lowest voltage battery pack (12) to a charger with the switch (22) of the lowest voltage battery pack (12) and requesting a charging current from the charger,
measuring the voltage of the lowest voltage battery pack (12) while charging the lowest voltage battery pack (12), and
connecting a next higher voltage battery pack (12) to the charger in parallel to the lowest voltage battery pack (12) with the switch (22) of the next higher voltage battery pack (12) if the voltage of the lowest voltage battery pack (12) being charged is within a predefined safe range of a voltage of the next higher voltage battery pack (12) and requesting an amended charging current from the charger for charging the lowest voltage battery pack (12) and the next higher voltage battery pack (12) together.

2. Charging method according to claim 1, **characterized by** the further steps:
measuring the voltages of the battery packs (12) being charged, and
connecting a further next higher voltage battery pack (12) to the charger in parallel to the battery packs (12) being charged with the switch (22) of the further next higher voltage battery pack (12) if the voltages of the battery packs (12) being charged are within a predefined safe range of the voltage of the further next higher voltage battery pack (12) and requesting a further amended charging current from the charger for charging the battery packs (12) being charged and the further next higher voltage battery pack (12) together.

3. Charging method according to claim 2, **characterized in that** the steps of claim 2 are repeated until all battery packs (12) are connected and charged till they reach a desired state of charge.

4. Charging method according to any of the preceding claims, **characterized in that** a requested charging current (30) requested from the charger is calculated by closed loop control algorithms (32) for all connected battery packs (12) and a further step, wherein
the closed loop control algorithms (32) comprise calculating a calculated desired charging current (38) for each battery pack (12) connected to the charger based on an individual battery pack desired current (34) and an actual battery pack current (36), and
the further step comprises selecting the minimum of all calculated desired charging currents (38) from the charger as the requested charging current (30) requested from the charger.

5. Charging method according to claim 4, **characterized in that** an amended requested charging current (40) requested from the charger is calculated by another closed loop control algorithm (42) and a further step, wherein
the another closed loop control algorithm (42) is performed if a voltage (46) provided by the charger is within a specified range of a maximum voltage (44) of the electrical power system (10), wherein the another closed loop control algorithm (42) comprises calculating a constant voltage charging current (48) needed from the charger to ensure a constant voltage at the electrical power system (10), and
the further step comprises selecting a minimum of the constant voltage charging current (48) and the requested charging current (30) as an amended requested charging current (40) requested from the charger.

6. Charging method according to any of the preceding claims, **characterized in that** a coolant is flowing through the battery packs (12) so that heat generated in battery packs during charging is carried to other battery packs (12) of the electrical power system (10).

7. Charging method according to any of the preceding claims, **characterized in that** the charging method comprises the further step before measuring the voltage of each battery pack (12):
detecting if a charging door (26) of a charging inlet (24) electrically connected to the battery packs (12) is open or closed.

8. Charging method according to claim 7, **characterized in that** the charging method comprises the further step after detecting if the charging door (26) is open or closed:
opening each switch (22) of each battery pack (12) for isolating the charging inlet (24).

9. Charging method according to claim 8, **characterized in that** the charging method comprises the further step after opening each switch (22):
electrically connecting the charger to the charging inlet (24) for charging the battery packs (12).

10. Electrical power system (10) for an aircraft, comprising a plurality of electrical loads (14), a plurality of battery packs (12), a control unit (20) and an electrical power distribution network (16) configured to connect the battery packs (12) with the electrical loads (14), such that each electrical load (14) can be driven by at least one associated battery pack (12) via at least one associated power lane (18) of the electrical power distribution network (16), **characterized in that** each battery pack (12) comprises a switch (22) for switching between a charging state and a noncharging state of the battery pack (12), and wherein the control unit (20) is configured to run the charging method according to any of claims 1 to 9.

11. Electrical power system (10) according to claim 10, **characterized in that** each switch (22) comprises a solid state power controller.

12. Electrical power system (10) according to claim 10 or 11, **characterized in that** the electrical power system (10) comprises a charging inlet (24) and each switch (22) is directly electrically connected to the charging inlet (24).

13. Electrical power system (10) according to claim 12, **characterized in that** the charging inlet (24) comprises a charging door (26) and a charging door sensor (28) for detecting if the charging door (26) is open or closed.

14. Computer program product comprising instructions which cause a control unit (20) of an electrical power system (10) according to any of claims 10 or 13 to perform the charging method according to any of claims 1 to 9.
